# EUROPEAN PATENT SPECIFICATION

(11) **EP 3 880 725 B1**
(45) Date of publication and mention of the grant of the patent: **06.11.2024**
(21) Application number: 19884322.9
(22) Date of filing: 15.11.2019
(51) Int. Cl.: C08F 220/44, C08F 218/04, C08F 214/00, C08F 226/02, C08F 228/02, C08F 2/06, C08F 4/04, C08F 4/34, D01D 1/02, D01F 9/22, C08F 222/02, D01F 6/18, D01D 5/06, D01F 6/38

(54) **PROCESS FOR THE PRODUCTION OF POLYACRYLONITRILE-BASED POLYMERS WITH HIGH CONVERSION**
VERFAHREN ZUR HERSTELLUNG VON POLYMEREN AUF POLYACRYLNITRILBASIS MIT HOHER KONVERSION
PROCÉDÉ DE PRODUCTION DE POLYMÈRES À BASE DE POLYACRYLONITRILE AVEC UNE CONVERSION ÉLEVÉE

(30) Priority: 16.11.2018 US 201862768212 P
(43) Date of publication of application: 22.09.2021
(73) Proprietor: Cytec Industries, Inc., Princeton, NJ 08540 (US)
(72) Inventor: MOSKOWITZ, Jeremy, Mauldin, SC 29662 (US); KUMAR, Varun, Greenville, SC 29607 (US); COOK, John, Desmond, Simpsonville, SC 29680 (US); TUCKER, Amy, Central, SC 29630 (US); GLADDEN, Eric, Easley, SC 29642 (US)
(74) Representative: Kraus & Lederer PartGmbB
(86) International application number: PCT/US2019/061823
(87) International publication number: WO 2020/102735

(56) References cited:
- WO-A1-2018/099909
- CN-A- 101 805 936
- CN-A- 101 805 936
- CN-A- 104 371 060
- CN-A- 106 591 994
- CN-A- 106 917 156
- US-A1- 2017 275 405

## Description

### Cross Reference to Related Applications

This application claims the priority of U.S. Provisional Application No. 62/768,212, filed November 16, 2018.

### Field of the Invention

The present disclosure relates generally to the production of polyacrylonitrile-based polymers with high conversion. The polyacrylonitrile-based polymers produced may be incorporated into a process for producing carbon fiber, typically carbon fiber used in manufacturing composite materials.

### Background

Carbon fibers have been used in a wide variety of applications because of their desirable properties, such as high strength and stiffness, high chemical resistance and low thermal expansion. For example, carbon fibers can be formed into a structural part that combines high strength and high stiffness, while having a weight that is significantly lighter than a metal component of equivalent properties. Increasingly, carbon fibers are being used as structural components in composite materials for aerospace and automotive applications, among others. In particular, composite materials have been developed wherein carbon fibers serve as a reinforcing material in a resin or ceramic matrix.

Lowering cost and increasing sustainability are desirable objectives for environmentally-conscious producers of carbon fibers and composite materials. Carbon fiber from acrylonitrile is generally produced by a series of manufacturing steps or stages, including polymerization, spinning, drawing and/or washing, oxidation, and carbonization. Polyacrylonitrile (PAN) polymer is currently the most widely used precursor for carbon fibers. CN101805936 discloses an acrylonitrile copolymer spinning solution comprising a mixed solvent solution of acrylonitrile copolymer, where the acrylonitrile copolymer is formed by polymerizing acrylonitrile with a copolymerizing monomer.

CN106917156 discloses preparation method for a boron-containing polyacrylonitrile protofilament and a carbon fiber thereof and a graphite fiber.

During the polymerization stage, acrylonitrile (AN), optionally with one or more comonomers, is converted into PAN polymer. Unsatisfactory conversion of the acrylonitrile into the PAN polymer is typically observed during the polymerization stage, resulting in unconverted acrylonitrile, which is typically not recycled, and leads to significant waste and concomitant cost. Not only is this a significant cost generator, the incineration process poses sustainability issues due to the amount of energy used and wasted material for the disposal of RAN. It is clear that in large-scale polymerization processes, an increase in conversion is beneficial. However, efforts to increase AN conversion during the production of PAN polymer without also altering the properties of the resulting polymer, and therefore the resulting carbon fiber, have not been sufficiently realized.

Thus, there is an ongoing need for processes for producing PAN polymer with high conversion in order to reduce the amount of unreacted AN, particularly during the manufacture of polymer fibers used for making carbon fiber and composite materials, without compromising the properties of the resulting polymer and carbon fibers.

### Summary of the Invention

This objective, and others which will become apparent from the following detailed description, are met by the processes of the present disclosure.

In a first aspect, the present disclosure relates to a process for producing a polyacrylonitrile-based polymer, the process comprising reacting acrylonitrile with at least one comonomer in the presence of a radical initiator in a liquid medium, wherein the radical initiator is present in an amount of from 1.1 wt % to 1.8 wt %, relative to the amount of acrylonitrile, and wherein no chain transfer agent is present; thereby producing the polyacrylonitrile-based polymer.

In a second aspect, the present disclosure relates to a process for producing carbon fibers, the process comprising:
a) producing a polyacrylonitrile-based polymer according to the process or processes described herein;
b) spinning a polymer solution comprising the polyacrylonitrile-based polymer produced in step a) into a coagulation bath to produce carbon fiber precursor fibers;
c) drawing the carbon fiber precursor fibers through one or more draw and wash baths, thereby forming drawn carbon fiber precursor fibers that are substantially free of solvent; and
d) oxidizing the drawn carbon fiber precursor fibers of step c) to form stabilized carbon fiber precursor fibers and then carbonizing the stabilized carbon fiber precursor fiber, thereby producing carbon fibers.

### Detailed Description

As used herein, the terms "a", "an", or "the" means "one or more" or "at least one" and may be used interchangeably, unless otherwise stated.

As used herein, the term "comprises" includes "consists essentially of" and "consists of." The term "comprising" includes "consisting essentially of" and "consisting of."

The first aspect of the present disclosure relates to a process for producing a polyacrylonitrile-based polymer, the process comprising reacting acrylonitrile with at least one comonomer in the presence of a radical initiator in a liquid medium, wherein the radical initiator is present in an amount of from about 0.6 wt % to about 1.8 wt %, relative to the amount of acrylonitrile, and wherein no chain transfer agent is present; thereby producing the polyacrylonitrile-based polymer.

The amount of acrylonitrile is not particularly limited. However, a suitable amount of acrylonitrile at the start of the reaction is from about 12.0 wt % to about 25.0 wt %, typically about 19.1 wt % to about 20.4 wt %, relative to the amount of liquid medium.

The polyacrylonitrile-based polymer may further comprise repeating units derived from comonomers. Such repeating units may be derived from suitable comonomers including, but not limited to, vinyl-based acids, such as methacrylic acid (MAA), acrylic acid (AA), and itaconic acid (ITA); vinyl-based esters, such as methacrylate (MA), ethyl acrylate (EA), butyl acrylate (BA), methyl methacrylate (MMA), ethyl methacrylate (EMA), propyl methacrylate, butyl methacrylate, β-hydroxyethyl methacrylate, dimethylaminoethyl methacrylate, 2-ethylhexylacrylate, isopropyl acetate, vinyl acetate (VA), and vinyl propionate; vinyl amides, such as vinyl imidazole (VIM), acrylamide (AAm), and diacetone acrylamide (DAAm); vinyl halides, such as allyl chloride, vinyl bromide, vinyl chloride and vinylidene chloride; ammonium salts of vinyl compounds and sodium salts of sulfonic acids, such as sodium vinyl sulfonate, sodium p-styrene sulfonate (SSS), sodium methallyl sulfonate (SMS), and sodium-2-acrylamido-2-methyl propane sulfonate (SAMPS), among others. In an embodiment, the comonomer is itaconic acid (ITA).

The comonomer ratio (amount of one or more comonomers to amount of acrylonitrile) is not particularly limited. However, a suitable comonomer ratio is 0 to 20%, typically 1 to 5%, more typically 1 to 3%.

The polymer can be made by any polymerization method known to those of ordinary skill in the art. Exemplary methods include, but are not limited to, solution polymerization, dispersion polymerization, precipitation polymerization, suspension polymerization, emulsion polymerization, and variations thereof.

One suitable method comprises mixing acrylonitrile (AN) monomer and a co-monomer described herein, in a solvent in which the polymer is soluble, thereby forming a solution. The solution is heated to a temperature above room temperature (i.e., greater than 25 °C). After heating, an initiator is added to the solution to initiate the polymerization reaction. Once polymerization is completed, unreacted AN monomers are stripped off (e.g., by de-aeration under high vacuum) and the resulting PAN polymer solution is cooled down. At this stage, the polymer is in a solution, or dope, form.

Examples of suitable solvents include, but are not limited to, dimethyl sulfoxide (DMSO), dimethyl formamide (DMF), dimethyl acetamide (DMAc), ethylene carbonate (EC), zinc chloride (ZnCl₂)/water and sodium thiocyanate (NaSCN)/water.

In another suitable method, the acrylonitrile (AN) monomer and a co-monomer described herein, may be polymerized in a medium, typically aqueous medium, in which the resulting polymer is sparingly soluble or non-soluble. In this manner, the resulting polymer would form a heterogenous mixture with the medium. The polymer is then filtered and dried.

Radical initiators can typically be divided into two general types according to the manner in which the first radical species is formed. The first type of radical initiators is activated by homolytic decomposition of covalent bonds by energy absorption, typically heat. As used herein, radical initiators of this type are considered thermally-activated radical initiators. The second type of radical initiators is activated by electron transfer from ions or atoms containing unpaired electrons followed by bond dissociation in the acceptor molecule. As used herein, radical initiators of this type are considered redox radical initiators.

In an embodiment, the radical initiator consists of one or more thermally-activated initiators. In such an embodiment, the polymerization reaction mixture is free of reducing agents. As used herein, the phrase "free of reducing agents" means that there is no external addition of material that may act as a reducing agent and that there is no detectable amount of the material that may be observed by analytical techniques known to the ordinarily-skilled artisan, such as, for example, gas or liquid chromatography, spectrophotometry, optical microscopy, and the like. As used herein, reducing agents refer to compounds that are capable of donating one or more electrons to an acceptor molecule in a redox reaction, which includes the electron transfer required to activate redox radical initiators. Examples of reducing agents that are absent from the polymerization reaction mixture include, but are not limited to, thiourea dioxide (also known as formamidine sulphinic acid), hydrazo-isobutyric acid, ascorbic acid and derivatives thereof, such as d-xyloascorbic acid, erythroascorbic acid and araboascorbic acid, and salts thereof; formaldehyde sulfoxilate (SFS), tetramethyl ethylene diamine (TMEDA), and metabisulfites, such as sodium metabisulfite.

Suitable thermally-activated initiators, also referred to as radical initiators or catalysts, for the polymerization include, but are not limited to, azo-based compounds, such as azo-bisisobutyronitrile (AIBN), 2,2'-azobis[2-(2-imidazolin-2-yl)propane]dihydrochloride, 2,2'-azobis(2-methylpropionamidine)dihydrochloride, 2,2'-azobis[N-(2-carboxyethyl)-2-methylpropionamidine]tetrahydrate, 2,2'-azobis[2-(2-imidazolin-2-yl)propane], 2,2'-azobis[2-methyl-N-(2-hydroxyethyl)propionamide], 4,4'-azobis(4-cyanovaleric acid), 2,2'-azobis-(2,4-dimethyl) valeronitrile (ABVN), among others; and organic peroxides, such as dilauroyl peroxide (LPO), di-tert-butyl peroxide (TBPO), diisopropyl peroxydicarbonate (IPP), among others.

The radical initiator is present in an amount of from 1.1 wt % to 1.8 wt %, relative to the amount of acrylonitrile. In an embodiment, the radical initiator is present in an amount of 1.1 wt % to 1.3 wt %, more typically from 1.2 wt % to 1.3 wt %, relative to the amount of acrylonitrile.

In an embodiment, the radical initiator is present in an amount of at least 1.1 wt %, or 1.2 wt %, and less than 1.8 wt%, relative to the amount of acrylonitrile. In another embodiment, the radical initiator is present in an amount of at least 0.6 wt %, 0.7 wt %, 0.8 wt %, 0.9 wt %, 1.0 wt %, 1.1 wt %, or 1.2 wt %, and less than 1.3 wt%, relative to the amount of acrylonitrile.

The reaction temperature is generally above room temperature (i.e., greater than 25 °C). Suitably, the reaction is maintained at a temperature of from about 30 °C to about 85 °C, typically about 40 °C to about 85 °C, more typically from about 58 °C to about 72 °C.

The process for producing a polyacrylonitrile-based polymer described herein is performed with no chain transfer agent present. As used herein, the phrase "no chain transfer agent present" means that there is no external addition of material that may act as a chain transfer agent and that there is no detectable amount of the material that may be observed by analytical techniques known to the ordinarily-skilled artisan, such as, for example, gas or liquid chromatography, spectrophotometry, optical microscopy, and the like. Exemplary compounds known to be chain transfer agents by those of ordinary skill in the art and that are not present in the process described herein include, but are not limited to, carbon tetrachloride (CCl₄), carbon tetrabromide (CBr₃), bromotrichloromethane (BrCCl₃), pentaphenylethane, compounds having one or more - SH functional groups (also called mercaptans or thiols), such as dodecyl mercaptan, and compounds having one or more -(C=S)-S- and/or -S-S- functional groups, such as chain transfer reagents disclosed in US Patent Application Publication US 2015/0174807 to Longgui Tang, et al.

The conversion, which refers to the amount of acrylonitrile converted into the polyacrylonitrile-based polymer relative to the total amount of acrylonitrile used at the start of the process, is unexpectedly high. The amount of acrylonitrile converted into the polyacrylonitrile-based polymer, relative to the total amount of acrylonitrile used, is at least 97.0 %, at least 97.1 %, at least 97.5 %, at least 97.7 %, or at least 99.0%, typically up to 99.5%.

The polyacrylonitrile-based polymer may be characterized by one or more properties, such as intrinsic viscosity, known to those of ordinary skill in the art. The intrinsic viscosity of the polyacrylonitrile-based polymer produced according to the process describe herein is in the range of about 1.3 to about 2.3, typically about 1.7 to about 2.3, more typically about 1.7 to about 1.9.

In the second aspect, the present disclosure relates to a process for producing carbon fibers, the process comprising:
a) producing a polyacrylonitrile-based polymer according to the process described herein;
b) spinning a polymer solution comprising the polyacrylonitrile-based polymer produced in step a) into a coagulation bath to produce carbon fiber precursor fibers;
c) drawing the carbon fiber precursor fibers through one or more draw and wash baths, thereby forming drawn carbon fiber precursor fibers that are substantially free of solvent; and
d) oxidizing the drawn carbon fiber precursor fibers of step c) to form stabilized carbon fiber precursor fibers and then carbonizing the stabilized carbon fiber precursor fiber, thereby producing carbon fibers.

In step b) of the process, carbon fiber precursor fibers are formed by spinning a polymer solution comprising the polyacrylonitrile-based polymer into a coagulation bath. The term "precursor fiber" refers to a fiber comprising a polymeric material that can, upon the application of sufficient heat, be converted into a carbon fiber having a carbon content that is about 90% or greater, and in particular about 95% or greater, by weight.

In the case in which the polymer is formed in a medium, typically one or more solvents, in which the polymer is soluble, the resulting polymer solution may be spun directly in step b). In the case in which the polymer is formed in a medium, typically aqueous medium, in which the polymer is sparingly soluble or non-soluble, the polymer may be isolated, for example, by filtration, and dissolved in one or more solvents to form a polymer solution suitable for use in step b).

The polymer solution (i.e., spin "dope") may be subjected to conventional wet spinning and/or air-gap spinning after removing air bubbles by vacuum. The spin dope can have a polymer concentration of at least 10 wt %, typically from about 16 wt % to about 28 wt % by weight, more typically from about 19 wt % to about 24 wt %, based on total weight of the solution.

In wet spinning, the dope is filtered and extruded through holes of a spinneret (typically made of metal) into the liquid coagulation bath for the polymer to form filaments. The spinneret holes determine the desired filament count of the fiber (e.g., 3,000 holes for 3K carbon fiber).

In air-gap spinning, a vertical air gap of 1 to 50 mm, typically 2 to 10 mm, is provided between the spinneret and the coagulating bath. In this spinning method, the polymer solution is filtered and extruded in the air from the spinneret and then extruded filaments are coagulated in a coagulating bath.

In an embodiment, the step of spinning a polymer solution into a coagulation bath comprises air gap spinning the polymer solution into the coagulation bath.

The coagulation liquid used in the process is a mixture of solvent and non-solvent. Water or alcohol is typically used as the non-solvent. Suitable solvents include the solvents described herein. In an embodiment, dimethyl sulfoxide, dimethyl formamide, dimethyl acetamide, or mixtures thereof, is used as solvent. In another embodiment, dimethyl sulfoxide is used as solvent. The ratio of solvent and non-solvent, and bath temperature are not particularly limited and may be adjusted according to known methods to achieve the desired solidification rate of the extruded nascent filaments in coagulation. However, the coagulation bath typically comprises 40 wt% to 85 wt% of one or more solvents, the balance being non-solvent, such as water or alcohol. In an embodiment, the coagulation bath comprises 40 wt% to 70 wt% of one or more solvents, the balance being non-solvent. In another embodiment, the coagulation bath comprises 50 wt% to 85 wt% of one or more solvents, the balance being non-solvent.

Typically, the temperature of the the coagulation bath is from 0 °C to 80 °C. In an embodiment, the temperature of the coagulation bath is from 30 °C to 80 °C. In another embodiment, the temperature of the coagulation bath is from 0 °C to 20 °C.

The drawing of the carbon fiber precursor fibers is conducted by conveying the spun precursor fibers through one or more draw and wash baths, for example, by rollers. The carbon fiber precursor fibers are conveyed through one or more wash baths to remove any excess solvent and stretched in hot (e.g., 40° C. to 100° C.) water baths to impart molecular orientation to the filaments as the first step of controlling fiber diameter. The result is drawn carbon fiber precursor fibers that are substantially free of solvent.

In an embodiment, the carbon fiber precursor fibers are stretched from -5% to 30%, typically from 1% to 10, more typically from 3 to 8%.

Step c) of the process may further comprise drying the drawn carbon fiber precursor fibers that are substantially free of solvent, for example, on drying rolls. The drying rolls can be composed of a plurality of rotatable rolls arranged in series and in serpentine configuration over which the filaments pass sequentially from roll to roll and under sufficient tension to provide filaments stretch or relaxation on the rolls. At least some of the rolls are heated by pressurized steam, which is circulated internally or through the rolls, or electrical heating elements inside of the rolls. Finishing oil can be applied onto the stretched fibers prior to drying in order to prevent the filaments from sticking to each other in downstream processes.

In step d) of the process described herein, the drawn carbon fiber precursor fibers of step c) are oxidized to form stabilized carbon fiber precursor fibers and, subsequently, the stabilized carbon fiber precursor fiber are carbonized to produce carbon fibers.

During the oxidation stage, the drawn carbon fiber precursor fibers, typically PAN fibers, are fed under tension through one or more specialized ovens, each having a temperature from 150 to 300 °C, typically from 200 to 280 °C, more typically from 220 to 270 °C. Heated air is fed into each of the ovens. Thus, in an embodiment, the oxidizing in step d) is conducted in an air environment. The drawn carbon fiber precursor fibers are conveyed through the one or more ovens at a speed of from 4 to 100 fpm, typically from 30 to 75 fpm, more typically from 50 to 70 fpm.

The oxidation process combines oxygen molecules from the air with the fiber and causes the polymer chains to start crosslinking, thereby increasing the fiber density to 1.3 g/cm³ to 1.4 g/cm³. In the oxidization process, the tension applied to fiber is generally to control the fiber drawn or shrunk at a stretch ratio of 0.8 to 1.35, typically 1.0 to 1.2. When the stretch ratio is 1, there is no stretch. And when the stretch ratio is greater than 1, the applied tension causes the fiber to be stretched. Such oxidized PAN fiber has an infusible ladder aromatic molecular structure and it is ready for carbonization treatment.

Carbonization results in the crystallization of carbon molecules and consequently produces a finished carbon fiber that has more than 90 percent carbon content. Carbonization of the oxidized, or stabilized, carbon fiber precursor fibers occurs in an inert (oxygen-free) atmosphere inside one or more specially designed furnaces. In an embodiment, carbonizing in step d) is conducted in a nitrogen environment. The oxidized carbon fiber precursor fibers are passed through one or more ovens each heated to a temperature of from 300 °C to 1650 °C, typically from 1100 °C to 1450 °C.

In an embodiment, the oxidized fiber is passed through a pre-carbonization furnace that subjects the fiber to a heating temperature of from about 300 °C to about 900 °C, typically about 350 °C to about 750 °C, while being exposed to an inert gas (e.g., nitrogen), followed by carbonization by passing the fiber through a furnace heated to a higher temperature of from about 700 °C to about 1650°C, typically about 800 °C to about 1450 °C, while being exposed to an inert gas. Fiber tensioning may be added throughout the precarbonization and carbonization processes. In pre-carbonization, the applied fiber tension is sufficient to control the stretch ratio to be within the range of 0.9 to 1.2, typically 1.0 to 1.15. In carbonization, the tension used is sufficient to provide a stretch ratio of 0.9 to 1.05.

Adhesion between the matrix resin and carbon fiber is an important criterion in a carbon fiber-reinforced polymer composite. As such, during the manufacture of carbon fiber, surface treatment may be performed after oxidation and carbonization to enhance this adhesion.

Surface treatment may include pulling the carbonized fiber through an electrolytic bath containing an electrolyte, such as ammonium bicarbonate or sodium hypochlorite. The chemicals of the electrolytic bath etch or roughen the surface of the fiber, thereby increasing the surface area available for interfacial fiber/matrix bonding and adding reactive chemical groups.

Next, the carbon fiber may be subjected to sizing, where a size coating, e.g. epoxy-based coating, is applied onto the fiber. Sizing may be carried out by passing the fiber through a size bath containing a liquid coating material. Sizing protects the carbon fiber during handling and processing into intermediate forms, such as dry fabric and prepreg. Sizing also holds filaments together in individual tows to reduce fuzz, improve processability and increase interfacial shear strength between the fiber and the matrix resin.

Following sizing, the coated carbon fiber is dried and then wound onto a bobbin.

A person of ordinary skill in the art would understand that other processing conditions (including composition of the spin solution and coagulation bath, the amount of total baths, stretches, temperatures, and filament speeds) are correlated to provide filaments of a desired structure and denier. The process of the present disclosure may be conducted continuously.

Carbon fibers produced according to the process described herein may be characterized by mechanical properties, such as tensile strength and tensile modulus per the ASTM D4018 test method.

The processes and materials of the present disclosure are further illustrated by the following non-limiting examples.

### Example 1.

A number of polymerization reactions were conducted in a 4-gallon reactor. Acrylonitrile (AN) was copolymerized with itaconic acid comonomer in dimethyl sulfoxide (DMSO) solvent in the presence of radical initiator, azo-bisisobutyronitrile (AIBN) and in the presence or absence of chain transfer agent, dodecyl mercaptan (DM). The temperature of the reactor was controlled to maintain the polymerization reaction in the range of 58-72 °C. The amounts of reagents used are summarized in Table 1 below.

**Table 1.**

| **Run** | **wt.% DM (wrt* AN)** | **wt.% AIBN (wrt* AN)** |
|---|---|---|
| A | 0 | 1.216 |
| B | 0.081 | 0.769 |
| C | 0.086 | 1.216 |
| D | 0 | 0.769 |
| E | 0 | 1.28 |
| F | 0 | 1.32 |

| | | |
|---|---|---|
| *with respect to | | |

The AN conversions of the resulting polymer for runs A-F are summarized in Table 2 below.

**Table 2.**

| **Run** | **Conv. (%)** |
|---|---|
| A | 97.1 |
| B | 94.4 |
| C | 97.5 |
| D | 95.4 |
| E | 97.7 |
| F | 97.7 |

As shown in Table 2, it can be seen that high conversions (at least 97.0%) are achieved when certain amounts of radical intiator is used in the absence of chain transfer agent in the polymerization reaction. Even though high conversion was observed in run C in which chain transfer agent was used, the resulting polymer exhibited a low intrinsic viscosity and low solution viscocity, which are unsuitable for carbon fiber manufacturing.

A concern associated with increased initiator concentration is an observed effect of post-polymerization. Generally, a spin run may take more than 24 hours to consume an entire batch of polymerization material, which provides ample time for changes to occur in the spin dope. However, it was surprisingly found that the polymer solution was stable at the dope spinning temperature (~50-55 °C) for the extended period of time following polymerization.

### Example 2.

A polymerization reaction was conducted at pilot scale using the same conditions as run F in Example 1, with the only change for the pilot trial being that the reactor went through a deaeration cycle and an ammonia addition step. The ammonia addition was controlled to 86% of the SCFH flow meter at 20 psi from an ammonia cylinder. The AN conversion of this reaction is shown in Table 3 below.

**Table 3.**

| **Run** | **Conv. (%)** |
|---|---|
| G | 97.6 |

About 0.35% AN was detected to be left from the reaction. The unreacted AN matches well with the conversion being 97.6%, as shown in Table 3. This example shows that the inventive process for producing PAN polymer with high conversion without the need for chain transfer agents can be achieved even at pilot scale without compromising polymer properties.

### Example 3.

The PAN polymer made in accordance to the process described in Example 2 was converted into carbon fibers.

The PAN polymer was subjected to a spinning step to produce precursor fibers. During spinning, there were no pressure elevations or filtration issues with the PAN polymer made in accordance to the process described in Example 2. The metering and booster pumps were stable during the spinning trial, which shows that in addition to molecular-scale homogeneity, there were no observable gels at the macro-scale.

PAN precursor fibers obtained from 8 batches of polymer made according to the inventive process were subjected to drawing, oxidation, and carbonization to form carbon fibers. For comparison, PAN precursors fibers obtained from 8 batches of polymer made by a process having AN conversion of about 92% and in which chain transfer reagent was used were subjected to the identical drawing, oxidation, and carbonization steps to form carbon fibers. The mechanical properties of the carbon fibers are summarized in Table 4 (comparative) and 5 (inventive) below.

**Table 4.**

| **Batch** | **Tensile Strength** | **Tensile Modulus** | **Carb Yield** | **Carb Density** | **Elongation** | **Ox Density** |
|---|---|---|---|---|---|---|
| C1 | 569 | 35.1 | 0.1764 | 1.8041 | 1.621 | 1.359 |
| C2 | 550 | 34.5 | 0.1823 | 1.7971 | 1.594 | 1.359 |
| C3 | 584 | 35.1 | 0.1718 | 1.7877 | 1.664 | 1.337 |
| C4 | 582 | 35.0 | 0.1763 | 1.8286 | 1.663 | 1.337 |
| C5 | 592 | 35.9 | 0.2069 | 1.8286 | 1.649 | 1.346 |
| C6 | 595 | 35.2 | 0.2123 | 1.8239 | 1.690 | 1.346 |
| C7 | 567 | 35.0 | 0.2168 | 1.8232 | 1.620 | 1.371 |
| C8 | 577 | 34.1 | 0.2216 | 1.8212 | 1.692 | 1.371 |
| **Mean** | **577** | **35.0** | **0.1956** | **1.8143** | **1.649** | **1.353** |

**Table 5.**

| **Batch** | **Tensile Strength** | **Tensile Modulus** | **Carb Yield** | **Carb Density** | **Elongation** | **Ox Density** |
|---|---|---|---|---|---|---|
| 1 | 567 | 36.0 | 0.1814 | 1.8082 | 1.575 | 1.339 |
| 2 | 533 | 35.8 | 0.1838 | 1.8102 | 1.489 | 1.339 |
| 3 | 614 | 35.9 | 0.1876 | 1.8066 | 1.710 | 1.385 |
| 4 | 578 | 35.1 | 0.1931 | 1.8116 | 1.647 | 1.385 |
| 5 | 591 | 35.5 | 0.1989 | 1.8114 | 1.665 | 1.342 |
| 6 | 617 | 35.1 | 0.2035 | 1.8102 | 1.758 | 1.405 |
| 7 | 581 | 34.5 | 0.2079 | 1.8009 | 1.684 | 1.342 |
| 8 | 576 | 33.3 | 0.2149 | 1.7974 | 1.730 | 1.405 |
| **Mean** | **582** | **35.2** | **0.1964** | **1.8071** | **1.657** | **1.368** |

In all cases, over the set of 8 inventive samples and 8 comparative samples, each property mean was in control within polymer batch. Moreover, the property means were all identical (within 2%) between inventive and comparative polymer batches. Thus, it is shown that high conversions (at least 97.0%) can be achieved without compromise to the mechanical properties of the final carbon fibers made therefrom.

## Claims

1. A process for producing a polyacrylonitrile-based polymer, the process comprising reacting acrylonitrile with at least one comonomer in the presence of a radical initiator in a liquid medium, wherein the radical initiator is present in an amount of from 1.1 wt % to 1.8 wt %, relative to the amount of acrylonitrile, and wherein no chain transfer agent is present; thereby producing the polyacrylonitrile-based polymer.

2. The process according to claim 1, wherein the amount of acrylonitrile at the start of the reaction is from 12.0 wt % to 25.0 wt %, typically 19.1 wt % to 20.4 wt %, relative to the amount of liquid medium.

3. The process according to claim 1 or 2, wherein the at least one comonomer is selected from the group consisting of vinyl-based acids, vinyl-based esters, vinyl amides, vinyl halides, ammonium salts of vinyl compounds, sodium salts of sulfonic acids, and mixtures thereof.

4. The process according to any one of claims 1-3, wherein the at least one comonomer is selected from the group consisting of methacrylic acid (MAA), acrylic acid (AA), itaconic acid (ITA), methacrylate (MA), ethyl acrylate (EA), butyl acrylate (BA), methyl methacrylate (MMA), ethyl methacrylate (EMA), propyl methacrylate, butyl methacrylate, β-hydroxyethyl methacrylate, dimethylaminoethyl methacrylate, 2-ethylhexylacrylate, isopropyl acetate, vinyl acetate (VA), vinyl propionate, vinyl imidazole (VIM), acrylamide (AAm), diacetone acrylamide (DAAm), allyl chloride, vinyl bromide, vinyl chloride, vinylidene chloride, sodium vinyl sulfonate, sodium p-styrene sulfonate (SSS), sodium methallyl sulfonate (SMS), sodium-2-acrylamido-2-methyl propane sulfonate (SAMPS), and mixtures thereof; typically itaconic acid (ITA).

5. The process according to any one of claims 1-4, wherein the liquid medium comprises one or more solvents, typically selected from the group consisting of dimethyl sulfoxide (DMSO), dimethyl formamide (DMF), dimethyl acetamide (DMAc), ethylene carbonate (EC), zinc chloride (ZnCl₂)/water and sodium thiocyanate (NaSCN)/water.

6. The process according to any one of claims 1-5, wherein the radical initiator is selected from the group consisting of azo-based compounds, organic peroxides, and mixtures thereof.

7. The process according to any one of claims 1-6, wherein the radical initiator is selected from the group consisting of azo-bisisobutyronitrile (AIBN), 2,2'-azobis[2-(2-imidazolin-2-yl)propane]dihydrochloride, 2,2'-azobis(2-methylpropionamidine)dihydrochloride, 2,2'-azobis[N-(2-carboxyethyl)-2-methylpropionamidine]tetrahydrate, 2,2'-azobis[2-(2-imidazolin-2-yl)propane], 2,2'-azobis[2-methyl-N-(2-hydroxyethyl)propionamide], 4,4'-azobis(4-cyanovaleric acid), 2,2'-azobis-(2,4-dimethyl) valeronitrile (ABVN), dilauroyl peroxide (LPO), di-tert-butyl peroxide (TBPO), diisopropyl peroxydicarbonate (IPP), and mixtures thereof; typically azo-bisisobutyronitrile (AIBN).

8. The process according to any one of claims 1-7, wherein the radical initiator is present in an amount of from 1.1 wt % to 1.3 wt %, more typically from 1.2 wt % to 1.3 wt %, relative to the amount of acrylonitrile.

9. The process according to any one of claims 1-8, wherein the reaction is maintained at a temperature of from 30 °C to 85 °C, typically 40 °C to 85 °C, more typically from 58 °C to 72 °C.

10. A process for producing carbon fibers, the process comprising:
a) producing a polyacrylonitrile-based polymer according to the process of any one of claims 1-9;
b) spinning a polymer solution comprising the polyacrylonitrile-based polymer produced in step a) into a coagulation bath to produce carbon fiber precursor fibers;
c) drawing the carbon fiber precursor fibers through one or more draw and wash baths, thereby forming drawn carbon fiber precursor fibers that are substantially free of solvent; and
d) oxidizing the drawn carbon fiber precursor fibers of step c) to form stabilized carbon fiber precursor fibers and then carbonizing the stabilized carbon fiber precursor fiber, thereby producing carbon fibers.

## Patentansprüche

1. Verfahren zur Herstellung eines Polymers auf Polyacrylnitrilbasis, wobei das Verfahren Umsetzen von Acrylnitril mit wenigstens einem Comonomer in Gegenwart eines Radikalinitiators in einem flüssigen Medium umfasst, wobei der Radikalinitiator in einer Menge von 1,1 Gew.-% bis 1,8 Gew.-% bezogen auf die Menge von Acrylnitril vorhanden ist und wobei kein Kettenübertragungsmittel vorhanden ist; um das Polymer auf Polyacrylnitrilbasis zu erzeugen.

2. Verfahren gemäß Anspruch 1, wobei die Menge an Acrylnitril zu Beginn der Reaktion von 12,0 Gew.-% bis 25 Gew.-%, typischerweise 19,1 Gew.-% bis 20,4 Gew.-%, bezogen auf die Menge an flüssigem Medium beträgt.

3. Verfahren gemäß Anspruch 1 oder 2, wobei das wenigstens eine Comonomer ausgewählt ist aus der Gruppe bestehend aus Säuren auf Vinylbasis, Estern auf Vinylbasis, Vinylamiden, Vinylhalogeniden, Ammoniumsalzen von Vinylverbindungen, Natriumsalzen von Sulfonsäuren und Gemischen davon.

4. Verfahren gemäß einem der Ansprüche 1-3, wobei das wenigstens eine Comonomer ausgewählt ist aus der Gruppe bestehend aus Methacrylsäure (MAA), Acrylsäure (AA), Itaconsäure (ITA), Methacrylat (MA), Ethylacrylat (EA), Butylacrylat (BA), Methylmethacrylat (MMA), Ethylmethacrylat (EMA), Propylmethacrylat, Butylmethacrylat, β-Hydroxyethylmethacrylat, Dimethylaminoethylmethacrylat, 2-Ethylhexylacrylat, Isopropylacetat, Vinylacetat (VA), Vinylpropionat, Vinylimidazol (VIM), Acrylamid (AAm), Diacetonacrylamid (DAAm), Allylchlorid, Vinylbromid, Vinylchlorid, Vinylidenchlorid, Natriumvinylsulfonat, Natrium-p-styrolsulfonat (SSS), Natriummethallylsulfonat (SMS), Natrium-2-acrylamido-2-methylpropansulfonat (SAMPS) und Gemischen davon; typischerweise Itaconsäure (ITA).

5. Verfahren gemäß einem der Ansprüche 1-4, wobei das flüssige Medium ein oder mehrere Lösungsmittel umfasst, typischerweise ausgewählt aus der Gruppe bestehend aus Dimethylsulfoxid (DMSO), Dimethylformamid (DMF), Dimethylacetamid (DMAc), Ethylencarbonat (EC), Zinkchlorid (ZnCl₂)/Wasser und Natriumthiocyanat (NaSCN)/Wasser.

6. Verfahren gemäß einem der Ansprüche 1-5, wobei der Radikalinitiator ausgewählt ist aus der Gruppe bestehend aus Verbindungen auf Azobasis, organischen Peroxiden und Gemischen davon.

7. Verfahren gemäß einem der Ansprüche 1-6, wobei der Radikalinitiator ausgewählt ist aus der Gruppe bestehend aus Azobisisobutyronitril (AIBN), 2,2'-Azobis[2-(2-imidazolin-2-yl)propan]dihydrochlorid, 2,2'-Azobis(2-methylpropionamidin)dihydrochlorid, 2,2'-Azobis[N-(2-carboxyethyl)-2-methylpropionamidin]tetrahydrat, 2,2'-Azobis[2-(2-imidazolin-2-yl)propan], 2,2'-Azobis[2-methyl-N-(2-hydroxyethyl)propionamid], 4,4'-Azobis(4-cyanovaleriansäure), 2,2'-Azobis-(2,4-dimethyl)valeronitril (ABVN), Dilauroylperoxid (LPO), Di-tert-butylperoxid (TBPO), Diisopropylperoxydicarbonat (IPP) und Gemischen davon; typischerweise Azobisisobutyronitril (AIBN).

8. Verfahren gemäß einem der Ansprüche 1-7, wobei der Radikalinitiator in einer Menge von 1,1 Gew.-% bis 1,3 Gew.-%, typischer von 1,2 Gew.-% bis 1,3 Gew.-%, bezogen auf die Menge von Acrylnitril vorhanden ist.

9. Verfahren gemäß einem der Ansprüche 1-8, wobei die Reaktion bei einer Temperatur von 30 °C bis 85 °C, typischerweise 40 °C bis 85 °C, typischer von 58 °C bis 72 °C, gehalten wird.

10. Verfahren zur Herstellung von Kohlenstofffasern, wobei das Verfahren umfasst:
a) Herstellen eines Polymers auf Polyacrylnitrilbasis gemäß dem Verfahren gemäß einem der Ansprüche 1-9;
b) Spinnen einer Polymerlösung, die das bei Schritt a) hergestellte Polymer auf Polyacrylnitrilbasis umfasst, in ein Koagulationsbad, um Kohlenstofffaser-Vorläuferfasern zu erzeugen;
c) Ziehen der Kohlenstofffaser-Vorläuferfasern durch ein oder mehrere Zieh- und Waschbäder, um gezogene Kohlenstofffaser-Vorläuferfasern zu bilden, die im Wesentlichen frei von Lösungsmittel sind; und
d) Oxidieren der gezogenen Kohlenstofffaser-Vorläuferfasern von Schritt c), um stabilisierte Kohlenstofffaser-Vorläuferfasern zu bilden, und dann Carbonisieren der stabilisierten Kohlenstofffaser-Vorläuferfasern, um Kohlenstofffasern zu erzeugen.

## Revendications

1. Procédé pour la production d'un polymère à base de polyacrylonitrile, le procédé comprenant la mise en réaction d'un acrylonitrile avec au moins un comonomère en la présence d'un initiateur de radicaux dans un milieu liquide, l'initiateur de radicaux étant présents en une quantité allant de 1,1 % en poids à 1,8 % en poids, par rapport à la quantité d'acrylonitrile, et, aucun agent de transfert de chaîne n'étant présent ; produisant ainsi le polymère à base de polyacrylonitrile.

2. Procédé selon la revendication 1, la quantité d'acrylonitrile au début de la réaction étant de 12,0 % en poids à 25,0 % en poids, typiquement 19,1 % en poids à 20,4 % en poids, par rapport à la quantité de milieu liquide.

3. Procédé selon la revendication 1 ou 2, l'au moins un comonomère étant choisi dans le groupe constitué par des acides à base de vinyle, des esters à base de vinyle, des vinylamides, des halogénures de vinyle, des sels d'ammonium de composés vinyliques, des sels de sodium d'acides sulfoniques, et des mélanges correspondants.

4. Procédé selon l'une quelconque des revendications 1 à 3, l'au moins un comonomère étant choisi dans le groupe constitué par l'acide méthacrylique (MAA), l'acide acrylique (AA), l'acide itaconique (ITA), le méthacrylate (MA), l'acrylate d'éthyle (EA), l'acrylate de butyle (BA), le méthacrylate de méthyle (MMA), le méthacrylate d'éthyle (EMA), le méthacrylate de propyle, le méthacrylate de butyle, le méthacrylate de β-hydroxyéthyle, le méthacrylate de diméthylaminoéthyle, l'acrylate de 2-éthylhexyle, l'acétate d'isopropyle, l'acétate de vinyle (VA), le propionate de vinyle, l'imidazole de vinyle (VIM), l'acrylamide (AAm), le diacétone acrylamide (DAAm), le chlorure d'allyle, le bromure de vinyle, le chlorure de vinyle, le chlorure de vinylidène, le vinylsulfonate de sodium, le p-styrène sulfonate de sodium (SSS), le méthallylsulfonate de sodium (SMS), le 2-acrylamido-2-méthylpropanesulfonate de sodium (SAMPS), et des mélanges correspondants ; typiquement l'acide itaconique (ITA).

5. Procédé selon l'une quelconque des revendications 1 à 4, le milieu liquide comprenant un ou plusieurs solvants, typiquement choisis dans le groupe constitué par le diméthylsulfoxyde (DMSO), le diméthylformamide (DMF), le diméthylacétamide (DMAc), le carbonate d'éthylène (EC), le chlorure de zinc (ZnCl₂)/eau et le thiocyanate de sodium (NaSCN)/eau.

6. Procédé selon l'une quelconque des revendications 1 à 5, l'initiateur de radicaux étant choisi dans le groupe constitué par des composés à base d'azo, des peroxydes organiques et des mélanges correspondants.

7. Procédé selon l'une quelconque des revendications 1 à 6, l'initiateur de radicaux étant choisi dans le groupe constitué par l'azo-bisisobutyronitrile (AIBN), le dichlorhydrate de 2,2'-azobis[2-(2-imidazolin-2-yl)propane], le dichlorhydrate de 2,2'-azobis(2-méthylpropionamidine), le tétrahydrate de 2,2'-azobis[N-(2-carboxyéthyl)-2-méthylpropionamidine], le 2,2'-azobis[2-(2-imidazolin-2-yl)propane], le 2,2'-azobis[2-méthyl-N-(2-hydroxyéthyl)propionamide], le 4,4'-azobis(acide 4-cyanovalérique), le 2,2'-azobis-(2,4-diméthyl)valéronitrile (ABVN), le peroxyde de dilauroyle (LPO), le peroxyde de di-tert-butyle (TBPO), le peroxydicarbonate de diisopropyle (IPP), et des mélanges correspondants ; typiquement l'azo-bisisobutyronitrile (AIBN).

8. Procédé selon l'une quelconque des revendications 1 à 7, l'initiateur de radicaux étant présent en une quantité allant de 1,1 % en poids à 1,3 % en poids, plus typiquement de 1,2 % en poids à 1,3 % en poids, par rapport à la quantité d'acrylonitrile.

9. Procédé selon l'une quelconque des revendications 1 à 8, la réaction étant maintenue à une température allant de 30 °C à 85 °C, typiquement 40 °C à 85 °C, plus typiquement de 58 °C à 72 °C.

10. Procédé pour la production de fibres de carbone, le procédé comprenant :
a) la production d'un polymère à base de polyacrylonitrile selon le procédé selon l'une quelconque des revendications 1 à 9 ;
b) le filage d'une solution de polymère comprenant le polymère à base de polyacrylonitrile produit dans l'étape a) dans un bain de coagulation pour produire des fibres de précurseur de fibres de carbone ;
c) l'étirage des fibres de précurseur de fibres de carbone à travers un ou plusieurs bains d'étirage et de lavage, formant ainsi des fibres de précurseur de fibres de carbone étirées qui sont sensiblement exemptes de solvant ; et
d) l'oxydation des fibres de précurseur de fibres de carbone étirées de l'étape c) pour former des fibres de précurseur de fibres de carbone stabilisées et ensuite la carbonisation de la fibre de précurseur de fibres de carbone stabilisée, produisant ainsi des fibres de carbone.
